# EUROPÄISCHE PATENTSCHRIFT

(11) **EP 1 140 483 B1**
(45) Veröffentlichungstag und Bekanntmachung des Hinweises auf die Patenterteilung: **29.10.2003**
(21) Anmeldenummer: 99963386.0
(22) Anmeldetag: 03.12.1999
(51) Int. Cl.: B32B 3/00, B32B 15/18, B23K 11/00

(54) **VERBUNDWERKSTOFF AUS ZWEI MITEINANDER WIDERSTANDSVERSCHWEISSBAREN DECKBLECHEN AUS STAHL UND EINER ZWISCHENLAGE, VERFAHREN ZU SEINER HERSTELLUNG UND ANLAGE ZUR DURCHFÜHRUNG DES VERFAHRENS**
COMPOSITE MATERIAL CONSISTING OF TWO STEEL COVER SHEETS RESISTANCE-WELDED TOGETHER AND AN INTERMEDIATE LAYER, METHOD FOR THE PRODUCTION THEREOF AND INSTALLATION FOR CARRYING OUT SAID METHOD
MATIERE COMPOSITE CONSTITUEE DE DEUX TOLES D'ACIER POUVANT ETRE SOUDEES PAR RESISTANCE ET D'UNE COUCHE INTERMEDIAIRE, PROCEDE DE PRODUCTION DE LADITE MATIERE COMPOSITE ET INSTALLATION PERMETTANT DE METTRE EN OEUVRE LEDIT PROCEDE

(30) Priorität: 15.01.1999 DE 19901313
(43) Veröffentlichungstag der Anmeldung: 10.10.2001
(73) Patentinhaber: ThyssenKrupp Stahl AG, 47166 Duisburg (DE)
(72) Erfinder: BEHR, Friedrich, D-52072 Aachen (DE); GALL, Hans-Dieter, D-47178 Duisburg (DE); NAZIKKOL, Cetin, D-47169 Duisburg (DE)
(74) Vertreter: Knauf, Rudolf, Dipl.-Ing.
(86) Internationale Anmeldenummer: EP9909486
(87) Internationale Veröffentlichungsnummer: WO00041878

(56) Entgegenhaltungen:
- EP-A- 0 579 534
- EP-A- 0 842 766
- DE-A- 3 834 829

## Beschreibung

Die Erfindung betrifft einen Verbundwerkstoff in Band- oder Tafelform aus zwei miteinander über elektrisch leitende Distanzkörper widerverstandsverschweißbaren Deckblechen aus Stahl und einer Zwischenlage aus einem Füllmaterial, in dem die Distanzkörper eingebettet sind.

Die Erfindung betrifft ferner ein Verfahren zum Herstellen des Verbundwerkstoffes in Bandform sowie eine Anlage zur Durchführung des Verfahrens.

Verbundwerkstoffe der genannten Art sowie Verfahren zu ihrer Herstellung sind bekannt. Solche Verbundwerkstoffe werden zum Beispiel als tiefgezogene Formbauteile im Kraftfahrzeugbau eingesetzt, weil sie im Verhältnis zu ihrem Gewicht ein hohes Trägkeitsmoment der Querschnittsfläche und damit eine hohe Beulsteifigkeit haben und sich durch hohe Schwingungs- und Körperschalldämpfungseigenschaften auszeichnen.

Die Verbundwerkstoffe sind als Halbfabrikate in Coilform oder in Tafelform lieferbar. Zum Teil werden die Verbundwerkstoffe aber auch von den Herstellern zu Fertigerzeugnissen weiterverarbeitet, indem sie zu Formbauteilen, zum Beispiel durch Tiefziehen, umgeformt und dann einer kathodischen Tauchlackierung mit anschließendem Einbrennen des Lackes unterworfen werden. Diese Weiterverarbeitung zu Fertigbauteilen kann selbstverständlich auch bei einem Fahrzeughersteller durchgeführt werden.

Bei einem bekannten Verbundwerkstoff der eingangs genannten Art (DE 38 34 829 C2) bestehen die elektrisch leitenden Körper aus einem Ferrosilizium-, Edelstahl- oder Nickelpulver, das dem die Zwischenlage bildenden Füllmaterial aus Kunststoff beigemischt ist. Bei diesem Verbundwerkstoff dient das Pulver in Korngrößen von 70 bis 130 % der Dicke der Zwischenlage ausschließlich dazu, den Verbundwerkstoff widerstandsschweißbar dadurch zu machen, daß er bei einer späteren Rollnaht- oder Punktschweißung mit einem Vollblech oder einem anderen gleichartigen Verbundblech die elektrische Verbindung zwischen den Schweißelektroden herstellt. Die Schubfestigkeit zwischen den Deckblechen wird dagegen über die an den Deckblechen klebende Zwischenlage aus Kunststoff bewirkt. Deshalb liegt die Dicke der Zwischenlage in der Größenordnung bis ca. 1 mm. Bei derart dünnen Zwischenlagen dürfte es auch noch möglich sein, ein Gemisch aus Kunststoff und Pulver, dessen Korngröße bis 130 % der Dicke der Zwischenlage ausmachen kann, aufzutragen.

Der Erfindung liegt die Aufgabe zugrunde, einen Verbundwerkstoff der eingangs genannten Art, ein Verfahren zu seiner Herstellung und eine Anlage zur Durchführung des Verfahrens zu entwickeln. Der Verbundwerkstoff soll eine im Vergleich zu den Deckblechen sehr dicke Zwischenlage haben und insbesondere durch Tiefziehen verformbar sein. Dabei sollen im wesentlichen die Deckbleche dem Verbundwerkstoff eine ausreichende Schubsteifigkeit und Schubfestigkeit geben.

Erfindungsgemäß ist der Verbundwerkstoff der eingangs genannten Art dadurch gekennzeichnet, daß die als gebogene Butzenscheiben ausgebildeten elektrisch leitenden Distanzkörper flachgedrückt zwischen den Deckblechen liegen und mit diesen widerstandsverschweißt sind.

Bei dem erfindungsgemäßen Verbundwerkstoff sind die Deckbleche über die angeschweißten Butzenscheiben stoffschlüssig miteinander verbunden, so daß bereits der Verbundwerkstoff als Halbfabrikat, also vor seiner Weiterverarbeitung durch Umformen, eine hohe Schubfestigkeit der Deckbleche gegeneinander hat. Ein weiterer Vorteil des erfindungsgemäßen Verbundwerkstoffes besteht darin, daß die beiden Deckbleche im wesentlichen glatt bleiben.

Nach einer Ausgestaltung der Erfindung besteht das Füllmaterial aus einem erst bei Lackeinbrenntemperaturen polymerisierenden, insbesondere vernetzenden Epoxidharz. Der Einsatz eines solchen Füllmaterials hat den Vorteil, daß sich ein Zuschnitt aus dem Verbundwerkstoff zu einem Formbauteil, insbesondere durch Tiefziehen, problemlos umformen läßt, weil die Zwischenlage wegen des noch nicht vernetzten Epoxidharzes die Verformung mitmacht und die Deckbleche nicht unzulässig hoch belastet werden und/oder es zum Ablösen der Deckbleche von der Zwischenlage kommt. Gleichzeitig ist auch sichergestellt, daß die Zwischenlage wegen ihres festen Zustandes beim Umformen nicht zwischen den Deckblechen herausgedrückt wird. Schließlich ist für eine kathodische Tauchlackierung,
der das Formbauteil unterworfen werden soll, gewährleistet, daß das Epoxidharz nicht bei den beim Einbrennen üblichen höheren und für eine längere Zeit einwirkenden Temperaturen aufschmilzt und ausläuft, sondern polymerisiert, wodurch erst die endgültige feste Verklebung der Deckbleche mit der Zwischenlage eintritt und das Formbauteil die optimale Beulsteifigkeit erhält.

Als Epoxidharz eignet sich ein Gemisch aus Fest- und Flüssigharz mit einem Verhältnis von 100 : 20 bis 100 : 10 und einem Härter. Dem Epoxidharz sollte ein die Neigung des Füllmaterials zum Fließen bei erhöhten Temperaturen vermindernder Stoff, wie hochdisperse Kieselsäure, beigemischt sein. Auch hat sich für das Umformen durch Tiefziehen bewährt, wenn dem Epoxidharz Mikrohohlkugeln aus Glas, Blähton oder Aluminium beigemischt sind. Solche Hohlkugeln lassen sich leicht verdrängen oder zerbrechen, ohne die Kontaktierung der Butzenscheiben mit den Deckblechen zu behindern, weil sich Bruchstücke in die üblicherweise vorgesehene Zinkschicht der Deckbleche oder in die Deckbleche selbst eindrücken. Solche Mikrohohlkugeln sollten einen Durchmesser von 70-130 µm, insbesondere etwa 100 µm mit einer Wanddicke von
< 10 µm haben, also in einer Größenordnung liegen, die um mehr als eine Zehnerpotenz kleiner ist als die Dicke der Zwischenlage.

Ferner hat es sich als vorteilhaft erwiesen, wenn dem Epoxidharz ein die adhäsive Haftung verbessernder Stoff, wie Talkum und/oder ein die kohäsive Haftung verbessernder Stoff, wie Wollastonit, beigemischt ist. Auch ist von Vorteil, wenn dem Epoxidharz mindestens ein Korrosionsinhibitor beigemischt ist.

Der Verfahrensteil der vorgenannten Aufgaben wird dadurch gelöst, daß auf ein als erstes Deckblech dienendes Band das Füllmaterial für die Zwischenlage in pastösem Zustand im Durchlauf aufgebracht wird und die Butzenscheiben nach Auflegen auf das Füllmaterial in diesen über ein als zweites Deckblech zugeführtes Band in einem von zwei Rollenelektroden gebildeten Schweißspalt zumindest bis zur Kontaktierung mit den Deckblechen eingedrückt und beim Verschweißen mit den Deckblechen weitgehend flachgedrückt werden.

Ein solches Verfahren hat den Vorteil der kontinuierlichen Fertigung eines Halbfabrikates, bei dem die Deckbleche an definierten Stellen durch die Butzenscheiben stoffschlüssig miteinander verbunden sind. Der Verbundwerkstoff kann dann abgetafelt oder gecoilt werden. Voraussetzung für ein Coilen ist natürlich, daß das Füllmaterial die Verformung im Coil mitmacht. Sofern das Füllmaterial entsprechend einer Ausgestaltung der Erfindung aus einem erst bei Lackeinbrenntemperaturen polymerisierenden Epoxidharz besteht, ist dies problemlos möglich.

Für den Herstellungsprozeß hat es sich als vorteilhaft erwiesen, wenn das Verschweißen der Butzenscheiben mit den Deckblechen im Schweißspalt vor Erreichen der kleinsten Weite des Schweißspaltes beendet wird. Das weitere Zusammendrücken des Verbundwerkstoffes bis zum Erreichen der kleinsten Weite dient dann der Nachformung und erlaubt das Herausdrücken eventueller beim Schweißen entstandener Gase.

Das Aufbringen des Füllmaterials für die Zwischenlage erfolgt vorzugsweise durch Aufextrudieren auf das erste Deckblech, insbesondere auf ein vorerwärmtes Band. In ein solches Füllmaterial lassen sich über das zweite Deckblech dann die Butzenscheiben ohne großen Kraftaufwand bis zur Kontaktierung eindrücken.

Eine gleichmäßige Verteilung der Butzenscheiben auf dem Band kann man leicht dadurch erreichen, daß mehrere Butzenscheiben gleichzeitig in einer oder mehreren Reihen quer zur Laufrichtung des Bandes auf die Zwischenlage aufgelegt werden.

An das Verfahren zum Herstellen eines Verbundwerkstoffes als Halbfabrikat kann sich nach einer weiteren Ausgestaltung die Weiterverarbeitung zum Fertigerzeugnis anschließen. Dies geschieht dann in der Weise, daß der Verbundwerkstoff zugeschnitten wird, die Zuschnitte zu Formbauteilen umgeformt, insbesondere tiefgezogen werden und dann einer Wärmebehandlung, insbesondere einer kathodischen Tauchlackierung mit Einbrennen des Lackes, unterworfen werden. Vor der Einbrennlackierung ist der Verbundwerkstoff ohne nachteilige Folgen für das Epoxidharz und seiner Anbindung an den Deckblechen umformbar. Erst bei der Einbrennlackierung polymerisiert, insbesondre vernetzt es, so daß dann das Formbauteil seine endgültige Beulsteifigkeit erhält.

Vorzugsweise werden die Zuschnitte mit einem Laserstrahl geschnitten oder die Zwischenlage an den Schnittkanten mit dem Strahl eines Lasers oder einer Quecksilberdampflampe ausgehärtet. Dadurch verhindert man, zusätzlich zu der Wirkung der thixotropierenden Zusätze zum Füllmaterial, daß bei der Weiterverarbeitung Epoxidharz zwischen den Deckblechen herausgedrückt wird.

Die Anlage zur Durchführung des beschriebenen Verfahrens ist gekennzeichnet durch zwei Haspel mit den Bändern für die Deckbleche und einer von zwei Leistenelektroden oder vorzugsweise von zwei Rollenelektroden gebildeten Widerstandsschweißvorrichtung, deren Schweißstrom in Intervallen ein- und ausschaltbar ist, sowie durch eine über dem unteren der beiden mit gegenseitigem Abstand übereinander dem von den Rollenelektroden gebildeten Schweißspalt zugeführten Bändern angeordneten Auftragsvorrichtung für das Füllmaterial und einer ihr in Bandlaufrichtung nachgeordneten Speisevorrichtung für die Butzenscheiben, deren Takt für die Ausgabe der Butzenscheiben mit den Schweißintervallen synchronisiert ist.

Die Auftragsvorrichtung ist vorzugsweise ein Extruder mit einer Breitschlitzdüse. Die Speisevorrichtung für die Butzenscheiben kann eine Stanze mit mehreren Formstanzstempeln und parallel nebeneinander quer zur Bandlaufrichtung angeordneten Speiseröhren sein, die jeweils bei jedem Stanzhub eine Butzenscheibe auswerfen.

Im folgenden wird die Erfindung anhand einer ein Ausführungsbeispiel einer Anlage zum Herstellen eines Verbundwerkstoffes in Bandform schematisch darstellenden Zeichnung näher erläutert. Im einzelnen zeigen:
- Figur 1: die Anlage zum Herstellen eines Verbundwerkstoffes in Bandform in Seitenansicht
- und Figur 2: die Anlage gemäß Figur 1 in vergrößerter Darstellung und Seitenansicht im Bereich einer Schweißvorrichtung.

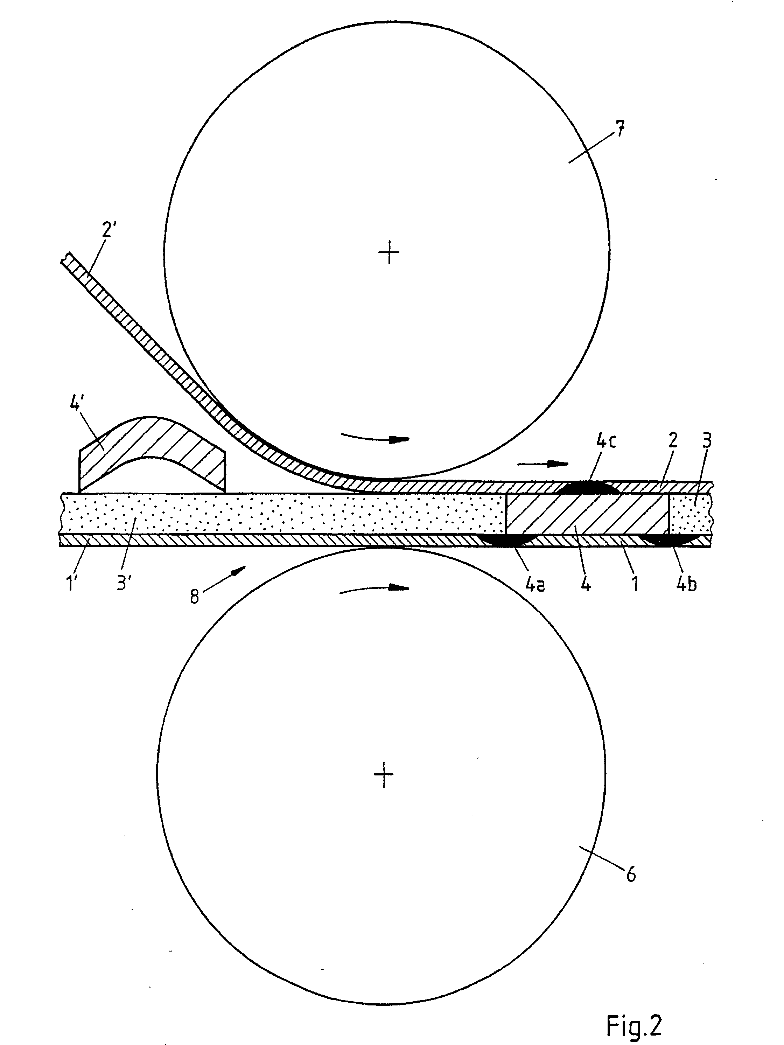

Der in der Anlage herzustellende Verbundwerkstoff in Bandform besteht aus einem unteren vorzugsweise verzinkten Deckblech 1 aus Stahl, einem oberen vorzugsweise verzinkten Deckblech 2 aus Stahl, einer Zwischenlage 3 aus Epoxidharz und einer Vielzahl von gleichmäßig über die Breite in Reihe und über die Länge verteilt und flach zwischen den Deckblechen 1,2 liegend angeordneten Butzenscheiben 4 aus Stahl. Wie vor allem Figur 2 zu entnehmen ist, haben die Deckbleche 1,2 eine um ein Vielfaches kleinere Dicke als die Zwischenlage 3. Die Butzenscheiben 4 haben die gleiche Dicke wie die Zwischenlage 3. Typische Maße eines solchen Verbundwerkstoffes sind eine Dicke von 0,3 mm für die einzelnen Deckbleche 1,2, eine Dicke von 1,4 mm für die Zwischenlage 3 und ein Durchmesser von 5 mm für die Butzenscheiben 4.

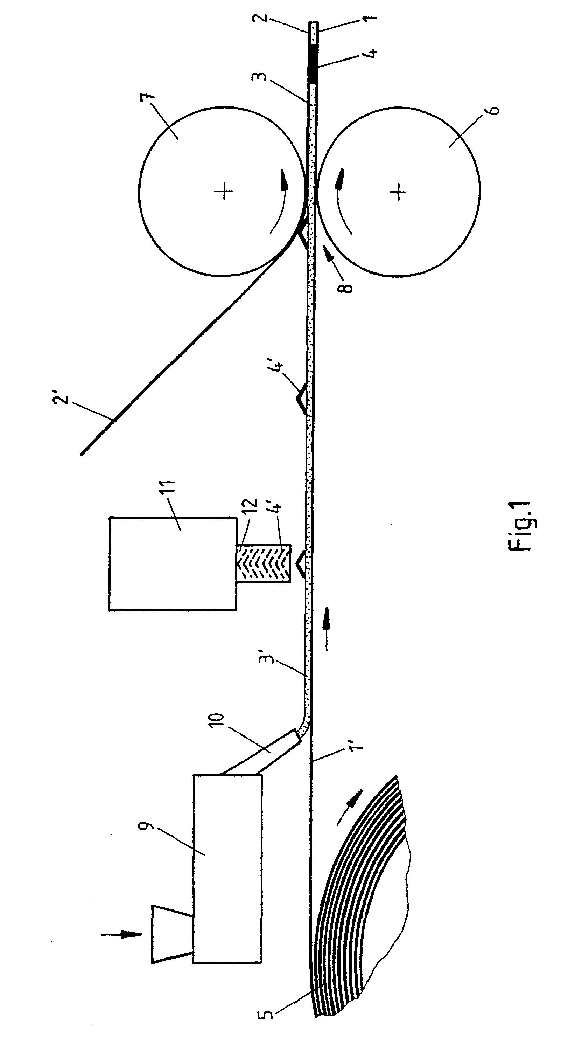

Die Deckbleche 1,2 werden als Bänder 1',2' von Coils 5 abgezogen, wobei in Figur 1 nur das Coil 5 für das untere Band 1' dargestellt ist. Das Band 1' wird im wesentlichen in horizontaler Lage einem von zwei Rollenelektroden 6,7 einer Widerstandsschweißvorrichtung gebildeten Schweißspalt 8 zugeführt. Das obere Band 2' wird von schräg oben dem Schweißspalt 8 zugeführt. Die Rollenelektroden 6,7 sind an einer Strom- und Spannungsversorgung angeschlossen. Die Schweißvorrichtung erlaubt es, intervallmäßig die miteinander zu verschweißenden Deckbleche 1,2 beziehungsweise Bänder 1',2' mit Schweißstrom zu versorgen.

Dabei kann das Ein- und Ausschalten des Schweißstromes auf verschiedene Art und Weise verwirklicht sein: Entweder über eine entsprechende Schaltvorrichtung oder aber über umfangsmäßig an mindestens einer Rollenelektrode 6,7 abwechselnde, elektrisch leitende Bereiche und elektrisch isolierte Bereiche.

Eine Auftragsvorrichtung 9 für ein Füllmaterial 3', und zwar einem noch nicht vernetzten Epoxidharz, ist als Extruder ausgebildet, der über eine Breitschlitzdüse 10 das Füllmaterial (Epoxidharz) 3' für die Zwischenlage 3 in pastöser Form aufträgt. Das Epoxidharz 3' sollte dabei eine Temperatur von etwas über 100°C haben. Vorzugsweise wird es auf das auf etwa gleiche Temperatur vorerwärmte Band 1' aufgetragen. Die Vorerwärmung des Bandes 1' kann in der Weise erfolgen, daß zuvor das Coil 5 auf diese Temperatur vorerwärmt wurde.

Dem Extruder 9 ist in Förderrichtung des Bandes 1' eine Speisevorrichtung 11 für gebogene Butzenscheiben 4' nachgeordnet. Diese Speisevorrichtung 11 weist über die Breite des Bandes 1' verteilt mehrere Speiseröhren 12 auf, über die taktweise und synchronisiert mit den Schweißintervallen der Rollenelektroden 6,7 die gebogenen Butzenscheiben 4' abgelegt werden. Die Speisevorrichtung 11 kann als Stanze mit mehreren mit einer Kerbe versehenen Formstempeln ausgerüstet sein, so daß beim Ausstanzen der Butzenscheiben aus einem Blechstreifen die Butzenscheiben 4' eine gebogene Form erhalten, wie vor allem etwa in Figur 2 dargestellt ist.

Die Speisevorrichtung 11 kann so gestaltet sein, daß bei jedem Stanzvorgang, mit dem eine Butzenscheibe 4' am einen Ende in die Speiseröhren 12 eingeführt wird, eine Butzenscheibe 4' am anderen Ende ausgeworfen wird.

Das untere Band 1' mit dem darauf extrudierten Epoxidharz 3' und den darauf abgelegten Butzenscheiben 4' wird dem Schweißspalt 8 zugeführt. In diesem Schweißspalt 8 drückt die obere Rollenelektrode 7 über das obere Band 2' die gebogene Butzenscheibe 4' in das Epoxidharz 3' und durch dieses so weit durch, daß sie mit ihren scharfen unteren Kanten das untere Band 1' kontaktiert und es quasi zu einer Linienberührung kommt. Aufgrund ihrer konvexen Wölbung auf der Oberseite findet auch an dem oberen Band 2' im wesentlichen eine Linienberührung statt. Wird nun der Schweißstrom eingeschaltet, dann ergeben sich an diesen Kontaktstellen hohe Übergangswiderstände, so daß es zum Verschweißen der Butzenscheiben 4' mit den Bändern 1',2' kommt. Dabei wird gleichzeitig die Butzenscheibe 4' weiter flachgedrückt. Noch bevor die Butzenscheibe 4' den kleinsten Abstand zwischen den Rollenelektroden 6,7 erreicht hat, wird der Schweißstrom abgeschaltet und es erfolgt dann nur noch ein Nachdrücken des Verbundwerkstoffes. Das Ergebnis ist in Figur 2 am Ausgang des Schweißspaltes 8 zu sehen, nämlich, daß die Butzenscheibe 4 im wesentlichen flachgedrückt ist und im Bereich der Linienkontaktierungen sich Schweißbereiche 4a,4b,4c gebildet haben.

Der so hergestellte Verbundwerkstoff in Bandform kann dann entweder abgetafelt oder aufgecoilt werden. Anschließend erfolgt entweder beim Bandhersteller oder beim Weiterverarbeiter das Zuschneiden und Umformen und die kathodische Tauchlackierung mit Einbrennen des Lackes. Im Ergebnis erhält man dann ein Formbauteil, das bezogen auf seine Formsteifigkeit ein geringes Gewicht hat und schall- und vibrationsmindernd wirkt.

## Patentansprüche

1. Verbundwerkstoff in Band- oder Tafelform aus zwei miteinander über elektrisch leitende Distanzkörper (4,4') widerstandsverschweißbaren Deckblechen (1,2) aus Stahl und einer Zwischenlage (3) aus einem Füllmaterial (3'), in dem die elektrisch leitenden Körper (4) eingebettet sind,
**dadurch gekennzeichnet , daß** die als gebogene Butzenscheiben ausgebildeten elektrisch leitenden Distanzkörper (4,4') flachgedrückt zwischen den Deckblechen (1,2) liegen und mit den Deckblechen (1,2) widerstandsverschweißt sind.

2. Verbundwerkstoff nach Anspruch 1,
**dadurch gekennzeichnet , daß** das Füllmaterial (3') der Zwischenlage (3) aus einem erst bei Lackeinbrenntemperaturen polymerisierenden Epoxidharz besteht.

3. Verbundwerkstoff nach Anspruch 2,
**dadurch gekennzeichnet , daß** das Epoxidharz ein Gemisch aus Fest- und Flüssigharz mit einem Verhältnis von 100 : 20 bis 100 : 10 und einem Härter ist.

4. Verbundwerkstoff nach Anspruch 3,
**dadurch gekennzeichnet , daß** dem Epoxidharz ein die Neigung des Füllmaterials zum Fließen bei erhöhten Temperaturen vermindernder Stoff beigemischt ist.

5. Verbundwerkstoff nach Anspruch 3 oder 4,
**dadurch gekennzeichnet , daß** dem Epoxidharz Mikrohohlkugeln beigemischt sind.

6. Verbundwerkstoff nach einem der Ansprüche 2 bis 5,
**dadurch gekennzeichnet , daß** dem Epoxidharz ein die adhäsive Wirkung verbessernder Stoff beigemischt ist.

7. Verbundwerkstoff nach einem der Ansprüche 2 bis 6,
**dadurch gekennzeichnet , daß** dem Epoxidharz ein die kohäsive Haftung verbessernder Stoff beigemischt ist.

8. Verbundwerkstoff nach einem der Ansprüche 2 bis 7,
**dadurch gekennzeichnet , daß** dem Epoxidharz mindestens ein Korrosionsinhibitor beigemischt ist.

9. Verfahren zum Herstellen eines Verbundwerkstoffes in Bandform nach einem der Ansprüche 1 bis 8,
**dadurch gekennzeichnet , daß** auf ein als erstes Deckblech (1) dienendes Band (1') das Füllmaterial (3') für die Zwischenlage (3) im pastösem Zustand im Durchlauf aufgebracht wird und die gebogenen Butzenscheiben (4') nach Auflegen auf das Füllmaterial (3') in diesen über ein als zweites Deckblech (2) zugeführtes Band (2') in einem von zwei Rollenelektroden (6,7) einer Widerstandsschweißvorrichtung gebildeten Schweißspalt (8) zumindest bis zur Kontaktierung eingedrückt und beim Verschweißen mit den Bändern (1',2') weitgehend flachgedrückt werden.

10. Verfahren nach Anspruch 9,
**dadurch gekennzeichnet , daß** das Verschweißen der gebogenen Butzenscheiben (4') mit den Bändern (1',2') im Schweißspalt (8) vor Erreichen seiner kleinsten Weite beendet wird.

11. Verfahren nach Anspruch 9 oder 10,
**dadurch gekennzeichnet , daß** das Füllmaterial (3') auf das vorerwärmte Band (1') aufextrudiert wird.

12. Verfahren nach einem der Ansprüche 9 bis 11,
**dadurch gekennzeichnet , daß** mehrere gebogene Butzenscheiben (4') gleichzeitig in einer oder mehreren Reihen quer zur Laufrichtung des Bandes (1') auf das Füllmaterial (4') aufgelegt werden.

13. Verfahren zum Herstellen von lackierten Formbauteilen nach einem der Ansprüche 9 bis 12,
**dadurch gekennzeichnet , daß** der Verbundwerkstoff im Zuge der Weiterverarbeitung zugeschnitten wird, die Zuschnitte zu Formbauteilen umgeformt werden und dann einer Einbrennlackierung unterworfen werden.

14. Verfahren nach Anspruch 13,
**dadurch gekennzeichnet , daß** die Zuschnitte mit einem Laserstrahl geschnitten oder die Zwischenlage an den Schnittkanten mit dem Strahl eines Lasers oder einer Quecksilberdampflampe ausgehärtet wird.

15. Anlage zur Durchführung des Verfahrens nach Anspruch 9,
**gekennzeichnet durch** zwei Haspel (5) mit den Bändern (1',2') für die Deckbleche (1,2) und einer von zwei Leistenelektroden oder Rollenelektroden (6,7) gebildeten Widerstandsschweißvorrichtung, deren Schweißstrom in Intervallen ein- und ausschaltbar ist, sowie mit einer über dem unteren der beiden mit gegenseitigem Abstand übereinander dem von den Rollenelektroden (6,7) gebildeten Schweißspalt (8) zugeführten Bänder (1',2') angeordneten Auftragsvorrichtung (9) für das Füllmaterial (3') und einer ihr in Bandlaufrichtung nachgeordneten Speisevorrichtung (11) für die gebogenen Butzenscheiben (4'), deren Takt für die Ausgabe dieser Butzenscheiben (4') mit den Schweißintervallen synchronisiert ist.

16. Anlage nach Anspruch 15,
**dadurch gekennzeichnet , daß** die Auftragsvorrichtung (9) ein Extruder mit einer Breitschlitzdüse (10) ist.

17. Anlage nach Anspruch 15 oder 16,
**dadurch gekennzeichnet , daß** die Speisevorrichtung (11) für die gebogenen Butzenscheiben (4') eine Stanze mit mehreren Formstanzstempeln und parallel nebeneinander quer zur Bandlaufrichtung angeordneten Speiseröhren (12) ist, die jeweils bei jedem Stanzhub eine gebogene Butzenscheibe (4') auswerfen.

## Claims

1. A composite material in band or slab form made of two cover plates (1, 2), made of steel, which can be resistance welded together via electrically conductive spacer bodies (4, 4'), and an intermediate layer (3) made of a filler material (3'), in which the electrically conductive bodies (4) are embedded,
**characterized in that** the electrically conductive spacer bodies (4, 4') implemented as curved slugs are positioned pressed flat between the cover, plates (1, 2) and are resistance welded to the cover plates (1, 2).

2. The composite material according to claim 1,
**characterized in that** the filler material (3') of the intermediate layer (3) consists of an epoxy resin which only polymerizes at enamel stoving temperatures.

3. The composite material according to claim 2,
**characterized in that** the epoxy resin is a mixture of solid and liquid resin in a ratio of 100:20 to 100:10 and a hardener.

4. The composite material according to claim 3,
**characterized in that** a substance which reduces the tendency of the filler material to flow at elevated temperatures is admixed into the epoxy resin.

5. The composite material according to claim 3 or 4,
**characterized in that** microspheres are admixed into the epoxy resin.

6. The composite material according to one of the claims 2 to 5,
**characterized in that** a substance which improves the adhesive effect is admixed into the epoxy resin.

7. The composite material according to one of the claims 2 to 6,
**characterized in that** a material which improves cohesion is admixed into the epoxy resin.

8. The composite material according to one of the claims 2 to 7,
**characterized in that** at least one corrosion inhibitor is admixed into the epoxy resin.

9. The process for the production of a composite material in band form according to one of the claims 1 to 8,
**characterized in that** the filler material (3') for the intermediate layer (3) is applied as a paste to a band (1') serving as the first cover plate (1) as it passes by and the curved slugs (4') are, after being laid on the filler material (3'), pressed into it at least until contact is made via a band (2') supplied as the second cover plate (2) in a welding gap (8) formed by two roller electrodes (6,7) of a resistance welding device and the slugs are largely pressed flat with the bands (1', 2') during welding.

10. The process according to claim 9,
**characterized in that** the welding of the curved slugs (4') with the bands (1', 2') in the welding gap (8) is ended before the smallest interval of the gap is reached.

11. The process according to claim 9 or 10,
**characterized in that** the filler material (3') is extruded onto the preheated band (1').

12. The process according to one of the claims 9 to 11,
**characterized in that** multiple curved slugs (4') are laid on the filler material (4') simultaneously in one or more rows transverse to the direction of movement of the band (1').

13. The process for the production of enameled molded component according to one of the claims 9 to 12,
**characterized in that** the composite material is cut to size in the course of further processing, the blanks are shaped into molded components, and they are then subjected to stove enameling.

14. The process according to claim 13,
**characterized in that** the blanks are cut with a laser beam or the intermediate material is cured at the cut edges with the beam of a laser or a mercury vapor lamp.

15. The facility for performing the process according to claim 9,
**characterized by** two reels (5) with the bands (1', 2') for the cover plates (1, 2), and a resistance welding device, formed by two strip electrodes or roller electrodes (6,7), whose welding current can be switched on and off at intervals, as well as an application device (9) for the filler material (3') positioned over the lower of the two bands (1', 2') supplied to the welding gap (8) formed by the roller electrodes (6, 7) positioned at a mutual distance and a feeding device (11) for the curved slugs (4'), positioned downstream in the direction of movement of the band, whose cycle for the release of these slugs (4') is synchronized with the welding intervals.

16. The facility according to claim 15,
**characterized in that** the application device (9) is an extruder with a slot die (10).

17. The facility according to claim 15 or 16,
**characterized in that** the feeding device (11) for the curved slugs (4') is a stamping press with multiple embossing stamps and feeding tubes (12), positioned parallel to one another transverse to the direction of movement of the band, which each eject a curved slug (4') during each stamping stroke.

## Revendications

1. Matière composite en forme de bande ou de plaque constituée de deux tôles de couverture (1, 2) d'acier pouvant être soudées ensemble par résistance via des corps d'écartement (4, 4') conducteurs électriques et d'une couche intermédiaire (3) constituée d'un matériau de remplissage (3'), dans lequel les corps conducteurs (4) électriques sont encastrés, **caractérisée en ce que** les corps d'écartement (4,4') conducteurs électriques formés comme des ronds de verre courbés se trouvent pressés à plat entre les tôles de couverture (1,2) et sont soudés par résistance avec les tôles de couverture (1, 2).

2. Matière composite selon la revendication 1, **caractérisée en ce que** le matériau de remplissage (3') de la couche intermédiaire (3) se compose d'une résine époxy polymérisante à partir des températures de cuisson de laque.

3. Matière composite selon la revendication 2, **caractérisée en ce que** la résine époxy est un mélange de résidu solide et liquide avec un rapport de 100:20 à 100:10 et un durcisseur.

4. Matière composite selon la revendication 3, **caractérisée en ce qu'**une matière diminuant l'inclinaison du matériau de remplissage pour couler par des températures élevées est mélangée à la résine époxy.

5. Matière composite selon la revendication, 3 ou 4, **caractérisée en ce que** des microsphères évidées sont mélangées à la résine époxy.

6. Matière composite selon l'une quelconque des revendications 2 à 5, **caractérisée en ce qu'**une matière améliorant l'effet adhésif est mélangée à la résine époxy.

7. Matière composite selon l'une quelconque des revendications 2 à 6, **caractérisée en ce qu'**une matière améliorant l'adhérence cohésive est mélangée à la résine époxy.

8. Matière composite selon l'une quelconque des revendications 2 à 7, **caractérisée en ce qu'**au moins un inhibiteur de corrosion est mélangé à la résine époxy.

9. Procédé de production d'une matière composite en forme de bande selon l'une quelconque des revendications 1 à 8, **caractérisé en ce que** le matériau de remplissage (3') pour la couche intermédiaire (3) est introduit dans un état pâteux en continu sur une bande (1') servant de première tôle de couverture (1) et les ronds de verre courbés (4') sont aplatis dans ceux-ci après application sur le matériau de remplissage (3') via une bande amenée (2') comme une seconde tôle de couverture (2) dans un écartement de soudure (8) formé par deux électrodes en forme de molette (6,7) d'un dispositif de soudage par résistance au moins jusqu'àu contact et sont considérablement pressés à plat par thermosoudure avec les bandes (1', 2').

10. Procédé selon la revendication 9, **caractérisé en ce que** le thermosoudage des ronds de verre courbés (4') avec les bandes (1',2') dans l'écartement de soudure (8) est terminé avant d'atteindre sa plus petite largeur.

11. Procédé, selon la revendication 9 ou 10, **caractérisé en ce que** le matériau de remplissage (3') est extrudé sur la bande préchauffée (1').

12. Procédé selon l'une quelconque des revendications 9 à 11, **caractérisé en ce que** plusieurs ronds de verre courbés (4') sont appliqués en même temps en une ou plusieurs rangées transversalement dans la direction de la marche de la bande (1') sur le matériau de remplissage (3').

13. Procédé de production des éléments de forme laqués selon l'une quelconque des revendications 9 à 12, **caractérisée en ce que** la matière composite est découpée au cours du traitement, les coupes sont transformées en éléments de forme et soumises ensuite à un laquage durci à chaud.

14. Procédé selon la revendication 13, **caractérisée en ce que** les coupes sont découpées avec un rayon laser ou la couche intermédiaire aux arêtes de coupe est durcie avec le rayon d'un laser ou d'une lampe à vapeur de mercure.

15. Dispositif d'exécution du procédé selon la revendication 9, **caractérisé par** deux bobines (5) avec les bandes (1',2') pour les tôles de couverture (1,2) et un dispositif de soudage par résistance formé de deux électrodes de forme ou électrodes en barrette de molette (6,7), dont le courant de soudage peut être établi ou arrêté à intervalle, ainsi qu'avec un dispositif d'enduction (9) pour le matériau de remplissage (3') agencé au dessus inférieure des deux bandes (1',2') amenées avec une distance réciproque entre elles à l'écartement de soudure (8) formé des électrodes en forme de molette (6,7) et un dispositif d'alimentation (11) agencé pour les ronds de verre courbés (4'), dont la cadence pour la sortie des ronds de verre (4') est synchronisée avec les intervalles de soudure.

16. Dispositif selon la revendication 15, **caractérisée en ce que** le dispositif d'enduction (9) est une extrudeuse avec une buse large plate (10).

17. Dispositif selon la revendication 15 ou 16, **caractérisée en ce que** le dispositif d'alimentation (11) pour les ronds de verre courbés (4') est une presse à estamper avec plusieurs poinçons de forme et des tubes d'alimentation (12) agencés parallèlement les uns contres les autres transversalement au sens de défilement de la bande, qui éjectent chacun à chaque coup de piston un rond de verre courbé (4').
